# FASCICULE DE BREVET EUROPEEN

(11) **EP 3 686 038 B1**
(45) Date de publication et mention de la délivrance du brevet: **20.10.2021**
(21) Numéro de dépôt: 20153304.9
(22) Date de dépôt: 23.01.2020
(51) Int. Cl.: B60D 1/62

(54) **PROCÉDÉ DE COUPLAGE DES TRAJECTOIRES RESPECTIVES D'AU MOINS DEUX VÉHICULES ET SON UTILISATION**
KOPPLUNGSVERFAHREN DER JEWEILIGEN FAHRWEGE VON MINDESTENS ZWEI FAHRZEUGEN, UND SEINE VERWENDUNG
METHOD FOR COUPLING THE RESPECTIVE TRAJECTORIES OF AT LEAST TWO VEHICLES AND USE THEREOF

(30) Priorité: 25.01.2019 FR 1900654
(43) Date de publication de la demande: 29.07.2020
(73) Titulaire: Noremat, 54710 Ludres (FR)
(72) Inventeur: BACHMANN, Christophe, 54000 NANCY (FR); CHESNIER, Frédéric, 54700 NORROY LES PONT A MOUSSON (FR)
(74) Mandataire: Hugues, Catherine

(56) Documents cités:
- DE-A1-102017 211 523
- US-A- 5 734 167
- US-A1- 2016 170 415

## Description

La présente invention a pour objet un procédé de couplage des trajectoires respectives d'au moins deux véhicules destinés à se déplacer en convoi, ainsi qu'une utilisation de ce procédé pour signaler la présence d'un véhicule de tête, au moyen d'un véhicule suiveur se déplaçant sans conducteur derrière le véhicule de tête. Le document US 2016/170415 A1 divulgue un procédé similaire.

A l'heure actuelle, différentes solutions sont d'ores et déjà mises en œuvre pour avertir les automobilistes du danger représenté par certains véhicules, tels que des engins de chantier, ou des véhicules de service, susceptibles d'être mêlés au trafic routier alors qu'ils évoluent généralement à une vitesse très réduite ou sont à l'arrêt, qu'ils occupent un volume important, préjudiciable en termes de visibilité, et qu'ils peuvent à tout moment entreprendre des manœuvres inopinées.

De manière connue, la mesure la plus simple employée à cet effet, consiste à équiper directement de tels véhicules de moyens de signalisation, tels que des gyrophares, une alternance de bandes rouges et blanches rétroréfléchissantes, etc., permettant de les repérer à distance, aussi bien de jour comme de nuit.

En ce qui concerne la signalisation de chantiers mobiles qui impliquent ce genre de véhicules, cette mesure est généralement complétée par le déploiement de panneaux de signalisation et/ou de feux tricolores, positionnés à une certaine distance en amont et/ou en aval du chantier mobile, afin de permettre une anticipation appropriée de la part des usagers de la route. De tels moyens de signalisation sont voués à être déplacés manuellement par les ouvriers au fur et à mesure de la progression des travaux, de sorte à conserver cette distance quasi constante pendant toute la durée des travaux.

Toutefois, cette solution ne permet pas toujours d'atteindre un niveau de sécurité optimum pour les usagers de la route et les ouvriers, et présente des limites, notamment sur les routes sinueuses, ou en cas d'obscurité, lorsque la visibilité est par définition moindre. De plus, il a été constaté que les panneaux de signalisation de chantier mobile ne sont pas toujours à une distance optimum, car les opérateurs ne les repositionnent pas systématiquement au fil du déplacement du chantier. Également, dans le cas où les opérateurs en charge de la mise en place de la signalisation d'un chantier se déplacent à bord d'un véhicule, la nécessité de repositionner les panneaux de chantiers mobiles peut impliquer différentes manœuvres pour revenir vers les moyens de signalisation à déplacer (demi-tour ou marche arrière) mais surtout nécessite que le chauffeur descende sur la route. En somme, et de manière paradoxale, toutes ces situations inhérentes aux méthodes actuelles de sécurisation de chantiers mobiles peuvent elles-mêmes être à l'origine d'accidents graves.

Par ailleurs, dans certains cas, des règles de fonctionnement ont été établies, et ont imposé la mise en œuvre de véhicules d'accompagnement équipés eux aussi de moyens de signalisation, dont en général des panneaux à message, et circulant en amont et/ou en aval de tels engins, à une distance telle qu'ils annoncent le danger suffisamment tôt aux véhicules approchants. En d'autres termes, selon ces règles, les véhicules escorteurs doivent être en mesure de suivre un chantier mobile avec fiabilité, quel que soit l'environnement et les conditions de circulation, et ce, le cas échéant, indépendamment de tout contact visuel.

Une telle pratique est couramment mise en œuvre dans le cadre du déplacement de convois exceptionnels, mais également dans celui de chantiers mobiles impliquant la présence de machines et éventuellement d'opérateurs sur la chaussée, où elle permet d'assurer la sécurité aussi bien de ces derniers que celles des usagers de la route.

A l'heure actuelle, les véhicules escorteurs nécessitent toujours la présence d'un conducteur à bord pour en contrôler la trajectoire, la vitesse, respecter la distance de sécurité adéquate avec l'engin escorté, et assurer toute la vigilance nécessaire. Toutefois, des développements sont en cours en vue de de ne plus faire appel à des conducteurs pour ce type de véhicule, et ainsi limiter le nombre d'opérateurs exposés aux risques d'accidents tout en s'affranchissant de la ressource humaine correspondante.

Une solution, basée sur la mise en œuvre d'un véhicule d'accompagnement dépourvu de chauffeur, et destinée à être mise en œuvre dans le cadre de travaux de maintenance d'accotements, a d'ores et déjà été décrite dans le document WO 2017/079803.

Plus précisément, cette publication décrit une solution dans laquelle au moins un véhicule escorteur équipé de moyens de signalisation, est apte à précéder ou suivre de manière autonome un engin de service, pour avertir les usagers de la route des travaux de fauchage ou de débroussaillage en cours. Conformément à cette solution, la trajectoire suivie par le véhicule escorteur est générée et contrôlée au fur et à mesure de la progression du chantier, en lien avec des paramètres initialement enregistrés dans le système, tels que la distance qui doit être ménagée entre chaque robot et l'engin et/ou la distance qui doit être ménagée entre chaque robot et l'accotement, ainsi que des données relevées en temps réel, correspondant notamment au positionnement géographique de chaque robot et de l'engin de travail.

La solution proposée dans ce document présente toutefois différents inconvénients. Ainsi, elle nécessite entres autres, la présence d'un accotement et n'est par conséquent pas adaptée à des applications dans lesquelles la trajectoire parcourue par le véhicule escorté ne s'effectue pas à proximité d'une telle zone, ou que celle-ci n'est pas détectable.

On connaît par ailleurs du document US 2016/0170415 une solution permettant à un engin de pavage de se déplacer de manière autonome, c'est-à-dire sans opérateur à bord, tout en coordonnant ses déplacements par rapport à ceux d'un engin l'alimentant en pavés, de sorte à permettre une alimentation continue en pavés et une augmentation de la cadence de travail. Cependant, la solution décrite repose sur la mise en œuvre de moyens de géolocalisation et de détection de la distance séparant les deux véhicules et se révèle en pratique très complexe à mettre en œuvre, et peu fiable.

Il en va de même en ce qui concerne les différentes variantes du procédé objet de la publication DE 10 2017 211 523.

Le but de la présente invention est de pallier les différents inconvénients propres aux solutions connues, en proposant une alternative basée sur la mise en œuvre d'un véhicule escorteur sans chauffeur, apte à se déplacer sans téléguidage, cette alternative présentant l'avantage d'une grande simplicité technologique, offrant une polyvalence d'usage, une parfaite fiabilité, un respect de l'environnement, et surtout garantissant un niveau de sécurité amélioré des intervenants et des usagers de la route.

De fait, l'objet de la présente invention est de proposer une solution permettant à un véhicule sans chauffeur de suivre à une distance prédéterminée un engin dont il signale la présence, en reproduisant sa trajectoire, cette solution étant applicable à de nombreux domaines, reposant sur une technologie simple en garantissant la fiabilité quelles que soient les conditions de circulation, la densité de trafic, la météo, ou la nature de la trajectoire parcourue, etc.

A cet effet, la présente invention a pour objet un procédé du genre indiqué en préambule, caractérisé en ce que l'on équipe d'une part le véhicule de tête de moyens de genèse en temps réel d'une piste matérielle et de moyens de genèse en temps réel d'une piste immatérielle, lesdites pistes matérielle et immatérielle étant représentatives de la trajectoire qu'il effectue, et d'autre part le véhicule suiveur de moyens de détection en temps réel desdites pistes matérielle et immatérielle et de moyens de genèse automatique de sa trajectoire à partir des pistes matérielle et immatérielle détectées, on déploie le convoi en plaçant le véhicule suiveur derrière le véhicule de tête, et on déclenche les moyens de genèse en temps réel d'une piste matérielle et d'une piste immatérielle, les moyens de détection en temps réel desdites pistes matérielle et immatérielle et les moyens de genèse automatique de la trajectoire.

Conformément à une variante de mise en œuvre de ce procédé, l'on utilise en tant que moyens de genèse en temps réel d'une piste immatérielle un ou plusieurs moyens choisi(s) parmi un premier groupe comprenant un récepteur de positions, une centrale inertielle, un diffuseur d'odeur, l'on équipe le véhicule suiveur d'un ou plusieurs moyen(s), complémentaire(s) ou non d'un moyen du premier groupe, choisi(s) parmi un second groupe comportant un récepteur de positions, une centrale inertielle, un détecteur d'odeur, et le cas échéant on prévoit des moyens de transmission sans fil de données entre le véhicule de tête et le véhicule suiveur, ainsi que des moyens de comparaison entre des données détectées en temps réel et les données formant ladite piste immatérielle.

Conformément à une autre variante de mise en œuvre du procédé selon l'invention, l'on utilise en tant que moyens de genèse en temps réel d'une piste matérielle un ou plusieurs moyens d'épandage d'une substance, et en tant que moyens de détection de la piste matérielle, un ou plusieurs moyens de repérage de ladite substance.

D'autre part, une autre variante privilégiée du procédé selon l'invention consiste à utiliser une centrale inertielle en tant que moyens de genèse en temps réel d'une piste immatérielle et un moyen d'épandage d'une substance en tant que moyens de genèse en temps réel d'une piste matérielle.

De manière optionnelle, on peut déposer ladite substance, selon le cas sous forme d'une ligne continue ou sous forme d'une ligne discontinue.

Par ailleurs, conformément au présent procédé, on peut utiliser une substance biodégradable dont l'impact environnemental est limité, voire néant et de préférence une substance fluorescente.

L'option selon laquelle l'on équipe le véhicule suiveur de moyens de collecte de ladite substance est par ailleurs également envisageable.

Conformément à une autre variante de mise en œuvre du présent procédé, l'on provoque le démarrage du véhicule suiveur de manière décalée par rapport au véhicule de tête.

Plus précisément, dans ce cas, on provoque de préférence le démarrage du véhicule suiveur à un instant t, postérieur à l'instant t0 de démarrage du véhicule de tête d'une durée permettant d'établir une distance prédéterminée entre le véhicule de tête et le véhicule suiveur.

Une caractéristique du procédé selon l'invention est également définie par le fait que l'on équipe le véhicule de tête de moyens de commande à distance du démarrage et de l'arrêt du véhicule suiveur, et/ou de moyens de contrôle de la vitesse du véhicule suiveur, et/ou de moyens de contrôle de la distance le séparant du véhicule suiveur.

De préférence, il est par ailleurs prévu que l'on équipe le véhicule suiveur de moyens conçus aptes à provoquer son arrêt automatique en cas d'absence de détection, selon le cas de ladite piste matérielle ou de ladite piste immatérielle ou desdites pistes matérielle et immatérielle.

Dans ce cas, l'on peut également équiper le véhicule de tête de moyens d'avertissement d'une absence de détection de ladite piste matérielle et/ou de ladite piste immatérielle par ledit véhicule suiveur.

La présente invention se rapporte en outre à une utilisation du procédé tel que précédemment décrit, pour signaler la présence d'un convoi au moyen d'un véhicule suiveur se déplaçant sans conducteur derrière un véhicule de tête.

Cette utilisation peut être caractérisée en ce que l'on équipe le véhicule suiveur de moyens de signalisation de la présence du véhicule de tête.

Elle peut encore être caractérisée en ce que le véhicule de tête est un engin de chantier réalisant un chantier ambulant le long d'une zone de travail.

L'invention sera mieux comprise, et d'autres caractéristiques et avantages de l'invention apparaîtront à la lumière de la description qui suit de deux exemples de mise en œuvre du procédé selon l'invention donnés à titre non limitatif.

La description est à lire en relation avec les dessins annexés illustrant chacun une vue schématique de côté d'un convoi formé d'un engin de maintenance d'accotement 1, 10 et d'un robot escorteur sans chauffeur 2, 20, ce convoi mettant respectivement en œuvre une variante différente du procédé selon l'invention.

Comme indiqué ci-dessus, la présente invention entend proposer une solution permettant à un engin tel qu'un robot, de préférence pourvu d'un moteur électrique alimenté au moyen de batteries et/ou à l'énergie solaire, d'escorter de manière autonome un véhicule susceptible de représenter un danger pour les usagers de la route, afin de les informer suffisamment tôt de sa présence.

Le but de l'invention est par conséquent de proposer un procédé permettant à un engin escorteur circulant sans chauffeur de reproduire exactement la trajectoire effectuée par le véhicule escorté, même en l'absence de détection visuelle directe de celui-ci, afin que sa présence soit signalée de manière fiable en toutes circonstances, sans interruption, et de manière telle qu'une anticipation adéquate des usagers de la route est autorisée.

De fait, le procédé proposé par la présente invention permet à un robot escorteur sans chauffeur 2, 20 de calquer automatiquement sa trajectoire sur celle de l'engin de maintenance 1, 10, à partir d'au moins deux informations générées par ce dernier, et ce indépendamment de tout conducteur à bord.

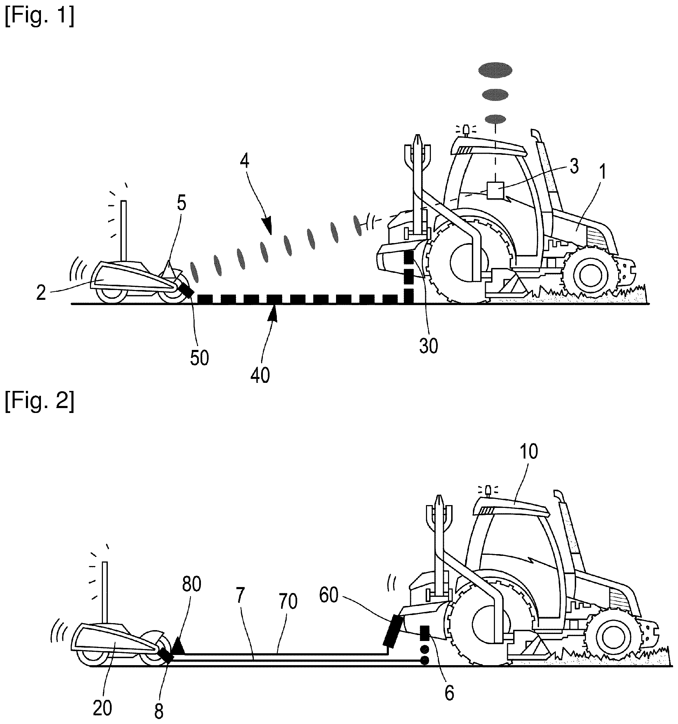

A cet effet, dans l'exemple illustré à la figure 1, l'engin de maintenance 1 a été équipé d'une unité 3 réceptrice/émettrice de données relatives à sa position, conçue apte à générer à partir de ces dernières une piste immatérielle 4, ainsi que d'une unité d'épandage 30 d'une substance fluorescente, de préférence biodégradable, formant au sol, en temps réel, au fur et à mesure de son déplacement, une piste matérielle 40 formée d'une succession de segments de substance. Le robot 2 a lui-même été équipé d'une unité 5 de réception des données relatives à la position de l'engin de maintenance 1, ainsi que d'une unité 50 de détection de la substance fluorescente déposée par celui, telle qu'une caméra, lui permettant de repérer et de suivre en temps réel les pistes immatérielle 4 et matérielle 40 émises par l'engin de maintenance 1. Le robot 2 est ainsi en mesure de construire sa propre trajectoire, reproduisant fidèlement celle de l'engin de maintenance 1, à partir des deux pistes, immatérielle 4 et matérielle 40, détectées. Une comparaison avec ses propres données de position, qui lui sont communiquées via une unité réceptrice/émettrice de données relatives à sa position dont il est lui-même pourvu, est effectuée dans cet objectif, ainsi qu'une analyse des données relatives à la piste matérielle 40 décelée.

En d'autres termes, dans cet exemple, l'engin de maintenance 1 entreprend ses travaux et se déplace progressivement le long du chantier, en émettant en temps réel et en continu en direction du robot escorteur 2, ses données de position formant la piste immatérielle 4, et en déposant progressivement une substance fluorescente formant une piste matérielle 40. Le robot escorteur 2 détecte et lit ces mêmes données en continu et en temps réel et est ainsi en mesure de se déplacer à vitesse constante derrière l'engin de maintenance 1 et en préservant une distance constante avec l'engin 1, en reproduisant fidèlement le parcours effectué par celui-ci, y compris lorsqu'il est hors de son champ de vision.

Dans l'exemple illustré à la figure 2, l'engin de maintenance d'accotement 10 a également été équipé d'une unité d'épandage 6 d'une substance, par exemple fluorescente et de préférence biodégradable, formant au sol, en temps réel, au fur et à mesure de son déplacement, une ligne, et par conséquent une piste matérielle 7, représentative de sa trajectoire.

A ce propos, il convient de noter que conformément au procédé selon l'invention, il peut être prévu de paramétrer l'unité d'épandage 6, comme l'unité d'épandage 30 dont est équipé l'engin de maintenance 1 de la figure 1, de manière telle que la ligne déposée au sol soit continue ou discontinue.

Tel qu'illustré à la figure 2, l'engin de maintenance 10 a en outre été pourvu d'une centrale inertielle 60. Conformément au procédé selon l'invention, les données relatives à la piste immatérielle 70 suivie par l'engin 10 et calculée à partir des données de la centrale inertielle 60 sont transmises au robot escorteur 20. Lui-même a par ailleurs été équipé d'une centrale inertielle 80. Une comparaison entre les données relatives à la piste immatérielle 70 qui lui ont été transmises par l'engin de maintenance 10 et celles relevées par la centrale inertielle 80, permet au robot escorteur 20 de disposer d'informations lui permettant de construire sa propre trajectoire, identique à celle de l'engin 10.

Pour garantir la fiabilité de cette trajectoire, le robot escorteur 20 met également à profit les données relatives à la piste matérielle 7, qu'il détecte en temps réel au moyen d'une unité de détection, telle qu'une caméra 8 de la substance fluorescente, dont il a été préalablement équipé. Conformément au présent procédé, il est de préférence prévu d'employer une substance à propriétés biodégradables apte à être éliminée spontanément dans l'environnement, au bout d'un certain temps après le passage du robot escorteur 20. De manière alternative, il peut être prévu de procéder à un ramassage de la substance déposée au sol, par la mise en œuvre de moyens de collecte dont le robot escorteur 20 peut être équipé.

Dans les deux cas de figure illustrés et décrits ci-dessus, il est par ailleurs prévu de procéder préférentiellement à un démarrage du robot escorteur 2, 20 de manière décalée par rapport à l'engin de maintenance d'accotement 1, 10, par exemple à un instant t, postérieur à l'instant t0 de démarrage de ce dernier d'une durée permettant d'établir une distance prédéterminée entre l'engin de maintenance d'accotement 1, 10 et le robot escorteur 2, 20.

La présente invention prévoit par ailleurs la possibilité d'équiper le robot escorteur 2, 20 de moyens d'arrêt automatique de suivi de sa trajectoire en cas de détection d'arrêt de l'engin de maintenance 1, 10 ou de marche-arrière effectuée par celui-ci ou encore en cas d'absence de détection des pistes matérielles 7, 40 ou immatérielles 4, 70.

Également, l'engin de maintenance 1, 10 peut être équipé de moyens de commande à distance du démarrage et de l'arrêt du robot escorteur 2, 20, et/ou de moyens de contrôle de sa vitesse, et/ou de moyens de contrôle de la distance le séparant du robot escorteur 2, 20 permettant à l'opérateur en charge du pilotage de l'engin de maintenance 1, 10 d'intervenir à distance sur le robot escorteur 2, 20 en cas de besoin.

Tel qu'il ressort de ce qui précède, le procédé selon l'invention trouve son application dans le domaine de la sécurisation de chantiers mobiles, tels que notamment des chantiers de fauchage / débroussaillage d'accotements. Il permet à un véhicule suiveur de type robot escorteur 2, 20, équipé d'une signalisation de sécurité adéquate, de suivre sans conducteur un engin de maintenance d'accotement 1, 10 afin d'en signaler la présence.

Ainsi, la solution définie par le présent procédé permet à un tel robot escorteur 2, 20 de suivre fidèlement et sans nécessiter la présence d'un conducteur un engin de maintenance d'accotement 1, 10 à une distance réglable, par exemple comprise entre 0 et 250m, en calquant sa trajectoire ainsi que sa vitesse sur celles dudit engin de maintenance 1, 10 au travers d'un système de navigation embarquée exploitant au moins des données émises et transmises par l'engin de maintenance 1, 10.

Il convient par ailleurs de noter qu'afin d'améliorer la robustesse du système et l'efficacité du procédé de couplage de trajectoires selon l'invention, la caractéristique selon laquelle l'on base ce dernier sur la détection à la fois d'une piste matérielle et d'une piste immatérielle est particulièrement avantageuse.

La mise en œuvre du présent procédé dans le domaine de la signalisation de chantiers mobiles permet ainsi d'éviter le recours à un véhicule de signalisation piloté par un conducteur, ainsi qu'un ou plusieurs opérateurs se déplaçant au sol et confrontés à des situations très dangereuses face à une circulation routière de plus en plus dense.

## Revendications

1. Procédé de couplage des trajectoires respectives d'au moins deux véhicules destinés à se déplacer en convoi, l'un desdits véhicules définissant un véhicule de tête (1, 10) et l'autre un véhicule suiveur (2, 20), **caractérisé en ce que** l'on équipe d'une part le véhicule de tête (1, 10) de moyens de genèse en temps réel d'une piste matérielle (7, 40) et de moyens de genèse en temps réel d'une piste immatérielle (4, 70), lesdites pistes matérielle et immatérielle étant représentatives de la trajectoire qu'il effectue, et d'autre part le véhicule suiveur (2, 20) de moyens de détection en temps réel desdites pistes matérielle et immatérielle (4, 7, 40, 70) et de moyens de genèse automatique de sa trajectoire à partir des pistes matérielle et immatérielle (4, 7, 40, 70) détectées, on déploie le convoi en plaçant le véhicule suiveur (2, 20) derrière le véhicule de tête (1, 10), et on déclenche les moyens de genèse en temps réel d'une piste matérielle (7, 40) et d'une piste immatérielle (4, 70), les moyens de détection en temps réel desdites pistes matérielle et immatérielle (4, 7, 40, 70) et les moyens de genèse automatique de la trajectoire.

2. Procédé selon la revendication 1, **caractérisé en ce que** l'on utilise en tant que moyens de genèse en temps réel d'une piste immatérielle (4, 70) un ou plusieurs moyens choisi(s) parmi un premier groupe qui comprend un récepteur/émetteur de positions (3), une centrale inertielle (60), un diffuseur d'odeur, l'on équipe le véhicule suiveur (2, 20) d'un ou plusieurs moyen(s), complémentaire(s) ou non d'un moyen du premier groupe, choisi(s) parmi un second groupe comportant un récepteur de positions (5), une centrale inertielle (80), un détecteur d'odeur, et le cas échéant on prévoit des moyens de transmission sans fil de données entre le véhicule de tête et le véhicule suiveur, ainsi que des moyens de comparaison entre des données détectées en temps réel et les données formant ladite piste immatérielle.

3. Procédé selon la revendication 1, **caractérisé en ce que** l'on utilise en tant que moyens de genèse en temps réel d'une piste matérielle (7, 40) un ou plusieurs moyens d'épandage (6, 30) d'une substance, et en tant que moyens de détection de la piste matérielle (7, 40), un ou plusieurs moyens de repérage (8, 50) de ladite substance.

4. Procédé selon la revendication 1, **caractérisé en ce que** l'on utilise une centrale inertielle (60) en tant que moyens de genèse en temps réel d'une piste immatérielle (70) et un moyen d'épandage (6) d'une substance en tant que moyens de genèse en temps réel d'une piste matérielle (7) .

5. Procédé selon l'une quelconque des revendications 3 ou 4, **caractérisé en ce que** l'on dépose ladite substance sous forme d'une ligne continue ou discontinue.

6. Procédé selon l'une quelconque des revendications 3 à 5, **caractérisé en ce que** l'on utilise une substance biodégradable.

7. Procédé selon l'une quelconque des revendications 3 à 6, **caractérisé en ce que** l'on utilise une substance fluorescente.

8. Procédé selon l'une quelconque des revendications 3 à 7, **caractérisé en ce que** l'on équipe le véhicule suiveur (2, 20) de moyens de collecte de ladite substance.

9. Procédé selon l'une quelconque des revendications précédentes, **caractérisé en ce que** l'on provoque le démarrage du véhicule suiveur (2, 20) de manière décalée par rapport au véhicule de tête (1, 10).

10. Procédé selon la revendication 9, **caractérisé en ce que** l'on provoque le démarrage du véhicule suiveur (2, 20) à un instant t, postérieur à l'instant t0 de démarrage du véhicule de tête (1, 10) d'une durée permettant d'établir une distance prédéterminée entre le véhicule de tête (1, 10) et le véhicule suiveur (2, 20).

11. Procédé selon l'une quelconque des revendications 1 à 10, **caractérisé en ce que** l'on équipe le véhicule de tête (1, 10) de moyens de commande à distance du démarrage et de l'arrêt du véhicule suiveur (2, 20), et/ou de moyens de contrôle de la vitesse du véhicule suiveur (2, 20) et/ou de moyens de contrôle de la distance le séparant du véhicule suiveur (2, 20).

12. Procédé selon l'une quelconque des revendications 1 à 11, **caractérisé en ce que** l'on équipe le véhicule suiveur (2, 20) de moyens conçus aptes à provoquer son arrêt automatique en cas d'absence de détection, selon le cas de ladite piste matérielle (7, 40) ou de ladite piste immatérielle (4, 70) ou desdites pistes matérielle (7, 40) et immatérielle (4, 70).

13. Procédé selon l'une quelconque des revendications 1 à 12, **caractérisé en ce que** l'on équipe le véhicule de tête (1, 10) de moyens d'avertissement d'une absence de détection de ladite piste matérielle (7, 40) et/ou de ladite piste immatérielle (4, 70) par ledit véhicule suiveur (2, 20).

14. Utilisation du procédé selon l'une quelconque des revendications 1 à 13, pour signaler la présence d'un convoi au moyen d'un véhicule suiveur (2, 20) se déplaçant sans conducteur derrière un véhicule de tête (1, 10).

15. Utilisation selon la revendication 14, **caractérisée en ce que** l'on équipe le véhicule suiveur (2, 20) de moyens de signalisation de la présence du véhicule de tête (1, 10) .

16. Utilisation selon l'une quelconque des revendications 14 ou 15, **caractérisée en ce que** le véhicule de tête (1, 10) est un engin de chantier réalisant un chantier ambulant le long d'une zone de travail.

## Patentansprüche

1. Verfahren zum Koppeln der jeweiligen Bewegungsbahnen mindestens zweier Fahrzeuge, die zur Fahrt in einem Konvoi vorgesehen sind, wobei eines der Fahrzeuge ein führendes Fahrzeug (1, 10) und das andere ein folgendes Fahrzeug (2, 20) definiert, **dadurch gekennzeichnet, dass** einerseits das führende Fahrzeug (1, 10) mit Mitteln zur Echtzeiterzeugung einer materiellen Spur (7, 40) und Mitteln zur Echtzeiterzeugung einer immateriellen Spur (4, 70) ausgestattet ist, wobei die materielle und die immaterielle Spur die von ihm genommene Bewegungsbahn repräsentieren, und andererseits das folgende Fahrzeug (2, 20) mit Mitteln zur Echtzeiterkennung der materiellen und der immateriellen Spur (4, 7, 40, 70) und Mitteln zum automatischen Erzeugen seiner Bewegungsbahn aus der erkannten materiellen und der erkannten immateriellen Spur (4, 7, 40, 70) ausgestattet ist, der Konvoi eingesetzt wird, indem das folgende Fahrzeug (2, 20) hinter dem führenden Fahrzeug (1, 10) platziert wird und die Mittel zur Echtzeiterzeugung einer materiellen Spur (7, 40) und einer immateriellen Spur (4, 70), die Mittel zur Echtzeiterkennung der materiellen und der immateriellen Spur (4, 7, 40, 70) und die Mittel zum automatischen Erzeugen der Bewegungsbahn ausgelöst werden.

2. Verfahren nach Anspruch 1, **dadurch gekennzeichnet, dass** als Mittel zur Echtzeiterzeugung einer immateriellen Spur (4, 70) ein oder mehrere Mittel verwendet werden, die aus einer ersten Gruppe ausgewählt sind, die einen Positionsempfänger/- sender (3), eine Trägheitseinheit (60), einen Duftstoffdiffusor umfasst, das folgende Fahrzeug (2, 20) mit einem oder mehreren Mitteln ausgestattet ist, die zu den Mitteln der ersten Gruppe komplementär sind oder nicht und aus einer zweiten Gruppe ausgewählt sind, die aus einem Positionsempfänger (5), einer Trägheitseinheit (80), einem Duftstoffdetektor besteht, und gegebenenfalls Mittel für eine drahtlose Datenübertragung zwischen dem führenden Fahrzeug und dem folgenden Fahrzeug sowie Mittel zum Vergleich der in Echtzeit erkannten Daten mit den die immaterielle Spur bildenden Daten vorgesehen sind.

3. Verfahren nach Anspruch 1, **dadurch gekennzeichnet, dass** als Mittel zur Echtzeiterzeugung einer materiellen Spur (7, 40) ein oder mehrere Mittel zum Verteilen (6, 30) einer Substanz verwendet werden und als Mittel zum Erkennen der materiellen Spur (7, 40) ein oder mehrere Mittel zum Orten (8, 50) der Substanz verwendet werden.

4. Verfahren nach Anspruch 1, **dadurch gekennzeichnet, dass** als Mittel zur Echtzeiterzeugung einer immateriellen Spur (70) eine Trägheitseinheit (60) und als Mittel zur Echtzeiterzeugung einer materiellen Spur (7) ein Mittel zum Verteilen (6) einer Substanz verwendet wird.

5. Verfahren nach einem der Ansprüche 3 oder 4, **dadurch gekennzeichnet, dass** die Substanz in Form einer durchgehenden oder unterbrochenen Linie aufgebracht wird.

6. Verfahren nach einem der Ansprüche 3 bis 5, **dadurch gekennzeichnet, dass** eine biologisch abbaubare Substanz verwendet wird.

7. Verfahren nach einem der Ansprüche 3 bis 6, **dadurch gekennzeichnet, dass** eine fluoreszierende Substanz verwendet wird.

8. Verfahren nach einem der Ansprüche 3 bis 7, **dadurch gekennzeichnet, dass** das folgende Fahrzeug (2, 20) mit Mitteln zum Aufnehmen der Substanz ausgestattet ist.

9. Verfahren nach einem der vorhergehenden Ansprüche, **dadurch gekennzeichnet, dass** das Anfahren des folgenden Fahrzeugs (2, 20) dem führenden Fahrzeug (1, 10) gegenüber versetzt erfolgt.

10. Verfahren nach Anspruch 9, **dadurch gekennzeichnet, dass** das Anfahren des folgenden Fahrzeugs (2, 20) zu einem Zeitpunkt t mit einem zeitlichen Abstand nach dem Zeitpunkt t0 des Anfahrens des führenden Fahrzeugs (1, 10) erfolgt, der es erlaubt, einen vorbestimmten Abstand zwischen dem führenden Fahrzeug (1, 10) und dem folgenden Fahrzeug (2, 20) herzustellen.

11. Verfahren nach einem der Ansprüche 1 bis 10, **dadurch gekennzeichnet, dass** das führende Fahrzeug (1, 10) mit Mitteln zum Fernsteuern des Anfahrens und Anhaltens des folgenden Fahrzeugs (2, 20) und/oder Mitteln zum Steuern der Geschwindigkeit des folgenden Fahrzeugs (2, 20) und/oder Mitteln zum Steuern des Abstands, der es vom folgenden Fahrzeug (2, 20) trennt, ausgestattet ist.

12. Verfahren nach einem der Ansprüche 1 bis 11, **dadurch gekennzeichnet, dass** das folgende Fahrzeug (2, 20) mit Mitteln ausgestattet ist, die dazu ausgelegt sind, sein automatisches Anhalten bei fehlender Erkennung je nachdem der materiellen Spur (7, 40) oder der immateriellen Spur (4, 70) oder sowohl der materiellen (7, 40) als auch der immateriellen (4, 70) Spur zu veranlassen.

13. Verfahren nach einem der Ansprüche 1 bis 12, **dadurch gekennzeichnet, dass** das führende Fahrzeug (1, 10) mit Mitteln zur Warnung vor einer fehlenden Erkennung der materiellen Spur (7, 40) und/oder der immateriellen Spur (4, 70) durch das folgende Fahrzeug (2, 20) ausgestattet ist.

14. Verwendung des Verfahrens nach einem der Ansprüche 1 bis 13, um die Anwesenheit eines Konvois mittels eines folgenden Fahrzeugs (2, 20), das fahrerlos hinter einem führenden Fahrzeug (1, 10) fährt, zu signalisieren.

15. Verwendung nach Anspruch 14, **dadurch gekennzeichnet, dass** das folgende Fahrzeug (2, 20) mit Mitteln zur Signalisierung der Anwesenheit des führenden Fahrzeugs (1, 10) ausgestattet ist.

16. Verwendung nach einem der Ansprüche 14 oder 15, **dadurch gekennzeichnet, dass** das führende Fahrzeug (1, 10) eine Baumaschine ist, durch die entlang eines Arbeitsbereichs eine Wanderbaustelle geschaffen wird.

## Claims

1. Method for coupling the respective paths of at least two vehicles intended to move in a convoy, one of said vehicles defining a lead vehicle (1, 10) and the other defining a follower vehicle (2, 20), **characterized in that** the lead vehicle (1, 10) is provided with means for real-time generation of a tangible track (7, 40) and with means for real-time generation of an intangible track (4, 70), said tangible and intangible tracks representing the path travelled by said lead vehicle, and the follower vehicle (2, 20) is provided with means for real-time detection of said tangible and intangible tracks (4, 7, 40, 70) and with means for automatically generating its path on the basis of the detected tangible and intangible tracks (4, 7, 40, 70), the convoy is deployed by placing the follower vehicle (2, 20) behind the lead vehicle (1, 10), and the means for real-time generation of a tangible track (7, 40) and an intangible track (4, 70), the means for real-time detection of said tangible and intangible tracks (4, 7, 40, 70), and the means for automatically generating the path are activated.

2. Method according to claim 1, **characterized in that** one or more means selected from a first group which comprises a position transceiver (3), an inertial unit (60), and an odor diffuser are used as means for real-time generation of an intangible track (4, 70), the follower vehicle (2, 20) is provided with one or more means, either complementary to a means from the first group or not, selected from a second group comprising a position receiver (5), an inertial unit (80), and an odor detector, and, if necessary, means for wireless data transmission between the lead vehicle and the follower vehicle and means for comparing data detected in real time with the data constituting said intangible track are provided.

3. Method according to claim 1, **characterized in that** one or more means (6, 30) for distributing a substance are used as means for real-time generation of a tangible track (7, 40), and one or more means (8, 50) for locating said substance are used as means for detecting the tangible track (7, 40).

4. Method according to claim 1, **characterized in that** an inertial unit (60) is used as means for real-time generation of an intangible track (70), and means (6) for distributing a substance are used as means for real-time generation of a tangible track (7).

5. Method according to either claim 3 or claim 4, **characterized in that** said substance is deposited in the form of a continuous or broken line.

6. Method according to any of claims 3 to 5, **characterized in that** a biodegradable substance is used.

7. Method according to any of claims 3 to 6, **characterized in that** a fluorescent substance is used.

8. Method according to any of claims 3 to 7, **characterized in that** the follower vehicle (2, 20) is provided with means for collecting said substance.

9. Method according to any of the preceding claims, **characterized in that** the follower vehicle (2, 20) is started in a time-delayed manner with respect to the lead vehicle (1, 10).

10. Method according to claim 9, **characterized in that** the follower vehicle (2, 20) is started at a time t which is after the time t0 at which the lead vehicle (1, 10) is started by a time period that allows a predetermined distance between the lead vehicle (1, 10) and the follower vehicle (2, 20) to be established.

11. Method according to any of claims 1 to 10, **characterized in that** the lead vehicle (1, 10) is provided with remote control means for starting and stopping the follower vehicle (2, 20) and/or with means for controlling the speed of the follower vehicle (2, 20) and/or with means for controlling the distance separating it from the follower vehicle (2, 20).

12. Method according to any of claims 1 to 11, **characterized in that** the follower vehicle (2, 20) is provided with means designed to stop it automatically if said tangible (7, 40) or intangible (4, 70) track, or said tangible (7, 40) and intangible (4, 70) tracks, as applicable, is or are not detected.

13. Method according to any of claims 1 to 12, **characterized in that** the lead vehicle (1, 10) is provided with means for warning that said tangible track (7, 40) and/or said intangible track (4, 70) has not been detected by said follower vehicle (2, 20).

14. Use of the method according to any of claims 1 to 13 to signal the presence of a convoy by means of a follower vehicle (2, 20) moving without a driver behind a lead vehicle (1, 10).

15. Use according to claim 14, **characterized in that** the follower vehicle (2, 20) is provided with means for signaling the presence of the lead vehicle (1, 10).

16. Use according to either claim 14 or claim 15, **characterized in that** the lead vehicle (1, 10) is a work machine carrying out a mobile project along a work site.
